# EUROPEAN PATENT SPECIFICATION

(11) **EP 0 747 492 B1**
(45) Date of publication and mention of the grant of the patent: **21.02.2001**
(21) Application number: 96109021.4
(22) Date of filing: 05.06.1996
(51) Int. Cl.: C21C 5/52, F27D 3/00, F27B 3/18

(54) **Method for melting ferrous metals by means of an electric arc furnace charged with ferrous materials containing energy-releasing substances**
Verfahren zum Schmelzen von Eisenmetallen in einem mit eisenhaltigen und energiefreisetzenden Materialien chargiertem Elektrolichtbogenofen
Procédé de fusion de métaux ferreux dans un four à arc électrique, chargé de matières ferreuses et de matieres, qui peuvant décharger de l'énergie

(30) Priority: 08.06.1995 CH 169195
(43) Date of publication of application: 11.12.1996
(73) Proprietor: ELTI S.r.l., 24060 Sovere (Bergamo) (IT)
(72) Inventor: Burgherr, Peter, Biasca (CH)
(74) Representative: Modiano, Guido, Dr.-Ing.

(56) References cited:
- EP-A- 0 024 250
- EP-A- 0 451 323
- WO-A-86/01230
- WO-A-93/13228
- US-A- 5 380 352
- STEEL TIMES - INCORPORATING IRON & STEEL, vol. 221, no. 5, 1 May 1993, page 221, 223 XP000365104 VALLOMY J A ET AL: "THE CONSTEEL PROCESS: AN INTEGRAL SCRAP PREHEATER FOR THE EAF"

## Description

The present invention relates to a method for melting ferrous metals, particularly scrap, by means of an electric arc furnace for steel production, according to the preamble of claim 1.

Treatment of ferrous metals with electric arc furnaces (EAF) to produce steel requires large amounts of energy. This energy is mainly necessary to heat the metal to temperatures above the melting temperature.

This energy is mainly provided by electricity, which is converted into heat by the electric arc formed between the electrodes inside the metal mass.

When analyzing the heating and melting process, it is immediately evident that from the exergetic point of view the resulting efficiency is very low, due to the conversion of electricity (which has a high exergy content) into heat (which has a lower exergy content).

Adding to this the economical factor constituted by the cost of electric power, the real need arises to be able to replace, at least partially, electric power with an alternative energy supply that is less onerous from the thermodynamic and economic point of view. The reduction in the consumption of electric power also leads, installed power being equal, to an increase in the productivity of the furnace. The most significant efforts in the siderurgical field are indeed aimed at achieving ever higher productivities that have the technical result of reducing the so-called "tap to tap" time (time between one tapping operation and the next).

Two paths are mainly followed to reduce this time:
-- optimization of the installed electric power: by reducing the inactive times of the electric power unit (reduction of the power-off time) and optimizing its use when the unit is active.
-- use of alternative energy sources: by recovering, inside the plant and by virtue of appropriate heat exchanges, the generated heat that is otherwise lost; or by replacing part of the energy demand that is met with electricity by using less onerous energy resources (combustion of adapted compounds, such as methane gas or coal).

Various technical solutions based on one or both of these aspects have already been developed and/or are industrially active. A brief listing thereof is provided in the following description.

The present invention relates most of all to the second item, and can be easily integrated, with the aim of global process optimization, in any type of electric arc furnace that is currently operating.

The present invention can be applied to all kinds of electric arc furnace, whether provided with scrap heating or of the conventional type. The prior art is therefore based on all these types, since the present method becomes integrated into the overall process that is typical of each one of these furnaces. The following types of conventional arc furnace are distinguished:
-- conventional electric arc furnace
-- conventional electric arc furnaces with the addition of burners and/or injectors (tuyeres) installed in the furnace and located outside and/or inside (hearth) the steel bath (system known to the expert in the field as DANARC technology). When the cold scrap is charged, these burners act as preheaters. Then, once melting has occurred, they can be used to burn inside the furnace the CO that forms in the bath.
-- so-called "shaft furnaces" (developed and supplied for example by the companies Tokyo Steel - IHI, Fuchs, and Voest - Alpine), where the metal mass is charged from the top of the furnace (top charge) by means of an appropriate vertical header. In plants developed by these companies, the scrap is preheated by using the heat contained in the exhaust gases generated by the furnace, which pass through the metal mass that lies inside the shaft. Depending on the configurations, as in the case of Fuchs, so-called oxygas burners are also used to increase the heat available for scrap heating, to provide the oxygen required for CO combustion, or to preheat the cold scrap in the first steps of the process.
-- the process known as CONSTEEL, with a process for feeding the scrap continuously and with preheating, by virtue of the sensible and combustion heat of the exhaust gases, in a horizontal channel.
-- so-called double-shaft furnaces, where a single roof and a single group of electrodes serve two shafts and accordingly two scrap charging and steel tapping lines (a unit of this type is in operation for example at the steel plants S.A.M. Montreau, France, and Arbed, Luxembourg). A single shaft operates alternately and the exhaust gases that it produces are directed into the second shaft, which is already charged with scrap, for preheating. The two furnaces are equipped with additional burners and shafts. When the steel contained in the active shaft is ready for tapping, the roof and the electrodes rotate to be arranged on the second shaft (which contains the preheated scrap) and start a new cycle.

As regards the process, it is important to stress that various applications are already known in the field of the utilization of energy sources that are alternative to electricity:
-- use of the sensible and combustion heat contained in the furnace exhaust gases
-- use of additional burners
-- use of the energy content of the scrap (combustion of the oils, paints, and all the compounds present in said scrap).

However, the latter is, from the point of view of the process, a secondary aspect, since the quantity and quality of these materials cannot be controlled but are a consequence of the use of contaminated scrap (which has a random and thus nonrepeatable nature).

Prior art document WO 93/13228A is an example of the above-described method.

EP-0 451 323A2 discloses a method for preheating scrap iron by pyrolysis of resinous residues contained therein. The field of application of the present invention therefore relates in general to meeting the energy demand of the furnace with energies that are alternative to electricity.

If one examines the ratios between the various energy contributions in a conventional electric arc furnace, one finds the following situation:
-- electric power: approximately 78%
-- chemical energy: approximately 22%

The expression "chemical energy" is also used to define the energy supplied to the melting process by means of combustion oxygen (approximately 13%) and by means of the gas burners that are used (approximately 9%).

The total energy absorbed by furnaces of the mentioned type is around 540 kW/t of steel and is divided into the two above-mentioned components.

These two groups can also be complemented by the energy contained in the exhaust gases from the furnace, if they are used, as occurs in various known proposals for construction, such as for example the so-called CONSTEEL plant of the U.S. company Triple/s Dynamics Inc., headquartered in Dallas, Texas, USA, to preheat the ferrous material before melting it. This preheating can also occur inside or outside the furnace (both solutions are adopted).

However, these conventional plants, which recover part of the heat of the furnaces by preheating the scrap fed in a horizontal or vertical feeding channel of varying length, do not yield very satisfactory results, and this is mainly due to the following reasons:
-- heat exchange between the gas and the ferrous material through a limited surface is not ideal, also due to the great difference in specific heat between the two elements that are in contact.
-- the energy that is contained in the fumes is relatively low (relatively low CO content at the outlet of the furnace).

The first aspect is easily explained by applying the physical and thermodynamic laws of heat exchange between the elements involved.

Explanation of the second aspect instead requires a short preamble. The scrap used as ferrous material for feeding the furnace almost always includes a percentage of organic volatile compounds. The combustion of these compounds (especially those that contain chlorine) in the furnace or in the preheater generates toxic compounds such as dioxins.

These substances can be destroyed only in a reheating chamber, where the gases are heated, if necessary, to preset temperatures with retention times that are also preset.

According to the experience of the Applicant, in order to ensure minimal environmental impact it is necessary to equip all scrap-based melting plants with reheating systems. The various standards established by public authorities currently prescribe the adoption of these systems only if the plant is provided with a scrap preheating system. Hopefully, the standards will be extended to all types of plant.

If one wishes to recover the heat contained in the furnaces by preheating the scrap, is it necessary to bear in mind that the temperature of the gases that leave the preheater must never be lower than the temperature that has been set for the destruction of the noxious substances. It is in fact counterproductive to reduce the temperature of the exhaust gases to lower values and then have to insert an additional burner to reheat the gases.

This having been said, we can now determine how much energy can be extracted in theory from the exhaust gases. In the best-known and best-studied case of the CONSTEEL plant, a value of 45-50 kWh/t is obtained, which corresponds to heating the ferrous material fed to the furnace by approximately 250°.

The maximum contribution that can be obtained by recovering all possible heat from the exhaust gases is around 8% of the total required energy, thus reducing the contribution of electricity to 70% of the total.

The following table defines the variation of the parameters of the furnace (DC and AC) with and without using scrap preheating.

| | AC Furnace | | DC Furnace | |
|---|---|---|---|---|
| | without preheating | with preheating | without preheating | with preheating |
| kWh electricity/T | 420 ± 5% | 370 ± 5% | 400 ± 5% | 350 ± 5% |
| Nm3 O2/T | 25 ± 5% | 25 ± 5% | 25 ± 5% | 25 ± 5% |
| Nm3 CH4/T | 8 ± 5% | 8 ± 5% | 8 ± 5% | 8 ± 5% |
| Kg electrodes/T | 2 ± 5% | 1.7 ± 5% | 1 ± 5% | 1 ± 5% |
| Kg coke/T | 10 ± 5% | 10 ± 5% | 10 ± 5% | 10 ± 5% |

Starting from the above-described assumptions, the aim of the invention is therefore to significantly increase the contribution of alternative energy. In conventional furnaces of the prior art, this type of contribution is both random (being contained in volatile substances in the ferrous material that is fed) and is a consequence of the operating practice (injection of coal or oxygen and use of the burners).

The invention seeks to propose a new operating method, in which the complementary energy contribution is made systematically and its effect occur uniformly over the entire mass of ferrous material that is fed to the furnace.

This aim is achieved with a method for melting ferrous metals according to the preamble of claim 1 and characterized by the characterizing part of claim 1.

The new type of energy contribution provided by the invention, i.e., the contribution offered by the addition and systematic combustion of energy-releasing material that is intimately mixed with the ferrous material to be melted, constitutes a complementary energy that adds to the electrical and chemical contribution mentioned earlier.

In other words, the method according to the invention consists in generating energy, in the form of heat, by burning fuel that is appropriately mixed beforehand with the ferrous material.

The object of the invention, and particularly of its dependent claims, is also to impart all the further specific teachings that are required for the application of the basic principle of the invention to the various melting systems and various types of melting furnace that are currently known.

The inventive method can in fact be applied in general both in the preheating duct, i.e., in the duct in which the ferrous material fed continuously to the furnace is preheated by the exhaust gases of the furnace, and in the shaft of the conventional furnace, which is charged discontinuously with successive charges.

The first case mentioned, which is obviously currently preferred in view of its undisputed advantages in terms of energy and operation, corresponds to the use, for example, of the furnaces with a horizontal channel of the CONSTEEL plant or of the also already mentioned furnaces with vertical headers (shaft furnaces), known as Tokyo Steel IHI, Fuchs, and Voest Alpine plants.

The method is controlled by acting both on the amount of fuel that is added to the scrap and by acting on the injection of the necessary additional comburent. The advantage of burning fuel in the scrap arises:
-- from the possibility to increase the contribution of energy that is alternative to electricity;
-- from the possibility to actually transmit this additional heat to the scrap, by taking advantage of the fact that the exchange surface between the combustion gases and the scrap is no longer constituted simply by the surface of the scrap bed (as occurs for example in the CONSTEEL plant), but by all of the surfaces that are contained inside said scrap.

Assuming that the plant associated with the furnace has a chamber for incinerating the toxic substances (based on the reasons presented in the previous pages), even compounds that generate pollutants as energy-releasing material can be used. The only modification that this entails is an increase in the treatment capacity of the incineration chamber, but as will become apparent hereinafter the benefits provided by virtue of the use of the complementary energy turn the consequent plant-related inconveniences into minor issues.

With the aid of some practical examples of embodiment of the inventive method, merely by way of example, the results that can be obtained by applying the present invention will be quantified.

The inventive process will also be illustrated by virtue of some figures that show, by way of example and in representation of all its possible applications, some preferred applications in the case of a plant for melting ferrous material with preheating of said material in a horizontal channel and continuous feeding of the ferrous material into the furnace, of the CONSTEEL type:
-- figure 1 is a schematic view of the initial part of the horizontal feeding channel of a CONSTEEL plant, which shows the feeding and distribution of the energy-releasing material in said channel;
-- figure 2 is a plan view of the plant of figure 1, in the region for feeding the energy-releasing material;
-- figure 3 is the same plant as in figures 1 and 2, with the addition of the duct for aspirating the exhaust gases from the channel and of the position of the burners for triggering the combustion of the energy-releasing material;
-- figure 4 is a transverse sectional view, taken along the horizontal feeding channel of a plant such as the one of figures 1-3, which also shows the position of the triggering burners and of the comburent injectors for the complementary energy-releasing material.

First of all, the most advanced energy processes will be examined, i.e., those processes that include preheating. In these processes, the necessary energy is provided by the sensible heat and by the combustion of the exhaust gases from the furnace. In this case we have the following energy balance:
electric P. of furnace = electric P. of conventional furnace - chemical P. - sensible Q of exhaust gases - Q of exhaust gas combustion

Since these two contributions are insufficient, according to the invention one also adds the contribution provided by the combustion, in this case in the preheating duct, of the energy-releasing material mixed beforehand with the scrap.

The energy balance thus becomes:
electric P. of furnace = electric P. of conventional furnace - chemical P. - sensible Q of exhaust gases - Q of exhaust gas combustion - Q of combustion of energy-releasing material

The energy-releasing material that is inventively mixed in with the ferrous material must also have some characteristics that make it suitable for use in the inventive method.

These characteristics are:
-- it must be composed of combustible material, preferably in solid form (but without ruling out the use of liquid fuels, such as for example drain oils, etcetera) and having a particle size that is small enough to allow its easy automatic handling and its correct mixing with the scrap;
-- it must have a good ratio between specific energy and cost in order to be competitive with other energy sources (first of all, electricity). It should be noted that highly energy-releasing materials at zero cost are available because they are considered rejects or waste to be eliminated. The use of these compounds therefore allows to also provide a service to the community;
-- it must be easily available in large amounts;
-- it must not contain substances that can "contaminate" the steel or in any case require excessively radical modifications of the operating practice at the furnace.

Of course, in order to meet some of the above requirements it is necessary to know in detail the chemical and physical characteristics of the material used as fuel.

An example of fuel that meets all these criteria is given, for example, by rubber granules from the disposal of used tires.

The following values characterize this fuel chemically, physically, and thermodynamically:
Composition of the (used) tire in terms of mass:
15% carcass (fabric, steel, fiberglass,...)
85% rubber (including 2% zinc oxide, 0.9% sulfur, variable percentage of chlorine)

Note: in order to simplify comprehension of the development, an energy-releasing material composed of 100% rubber is assumed hereinafter.

### Flash point:

approximately 350-450°C

### Melting point:

In the case of "normal" synthetic rubber, the minimum value is around 110°C and is much higher in the case of rubber for tires.

Net calorific value:
NCV = 28000 kJ/kg

The tables that follow summarize the values that can be obtained by applying the inventive method by virtue of the addition of supplemental fuel (in this case rubber) with and without the aid of scrap preheating by means of the exhaust gases of the furnace. With preheating (preheating power = 50 kWh/t **=>ΔT** scrap = 250°C):

| Complementary energy-releasing material (rubber) Kg/T | Complementary energy kWh/T | Heat in scrap kWh/T | T of scrap °C | Electric P. EAF A.C. kWh/T | Electric P. EAF D.C. kWh/T |
|---|---|---|---|---|---|
| 10 | 78 | 82 | 410 | 338 | 318 |
| 20 | 156 | 110 | 550 | 310 | 290 |
| 30 | 233 | 134 | 680 | 286 | 266 |
| 40 | 311 | 150 | 760 | 270 | 250 |
| 50 | 390 | 162 | 820 | 258 | 238 |

Note: the heat in the scrap (third column) includes the heat provided by preheating with the exhaust gases of the furnace.

Without preheating: (= conventional shaft furnace)

| Complementary energy-releasing material(rubber) Kg/T | Complementaryenergy kWh/T | Heat in scrap kWh/T | T of scrap °C | Electric P. EAF A.C. kWh/T | Electric P. EAF D.C. kWh/T |
|---|---|---|---|---|---|
| 10 | 78 | 32 | 160 | 388 | 368 |
| 20 | 156 | 60 | 300 | 360 | 340 |
| 30 | 233 | 84 | 430 | 336 | 306 |
| 40 | 311 | 100 | 510 | 320 | 300 |
| 50 | 390 | 112 | 570 | 308 | 288 |

t = tons of scrap

The above tables, based on the practical experience of the Applicant and on an appropriate mathematical model, point out the following:
-- the heat absorbed by the scrap (see third column of the above tables) is the alternative energy that is supplied to the furnace and therefore need not be provided by means of electricity. The last column shows the decrease in the electricity demand of the furnace as a function of the addition of complementary fuel.
-- the limit for the amount of energy-releasing material added to the scrap is set by the temperature reached by said scrap after absorbing the heat. In order to avoid melting of part of the fed scrap, due to the presence of low-melting alloys or of localized developments of excessively large amounts of heat, the overall temperature must never exceed 750-800°C. Of course, this requirement no longer holds in the case of conventional furnaces: partial melting of the scrap by the complementary energy inside the furnace is well-tolerated if not indeed desirable.

Particular attention must be given to the presence of volatile substances in the scrap. If there are large amounts, the amount of energy-releasing material must be reduced so that the overall thermal contribution is such as to avoid heating the scrap above the preset value.
-- it is evident that the addition of the energy-releasing material indeed entails advantages. Already with the addition of only 20 kg/t, we can say that the contribution of the additional fuel exceeds or at least equals the contribution that is obtained in the best of cases (with preheating integrated in the furnace, of the CONSTEEL type for example) by using the energy of the exhaust gases of the furnace. For higher amounts, the contribution of the additional fuel becomes prevailing in the preheating process. Because of this, the energy-releasing process is not a simple improvement in the use of the fuel contained in the scrap (as in the CONSTEEL process) but is an independent process, since the main energy contribution has, in the two cases, a different origin from different sources.
-- the energy that originates from the energy-releasing material added to the scrap and actually absorbed by the scrap is lower than the generated heat. The difference in heat is not lost but increases the temperature of the exhaust gases. Indeed, taking the values of the above table as reference, in the case of injection of air at ambient temperature, the gases that leave the scrap are at a temperature between 1000° and 1200°C, and accordingly heat (if necessary) the furnace exhaust gases as well. This temperature level allows to avoid massive heating of the exhaust gases at the inlet of the treatment unit that is required, as mentioned earlier, to comply with antipollution standards. The reheater assigned to this task thus becomes significantly smaller and less powerful. This situation is clearly exemplified by the CONSTEEL plant, wherein the prior art and the developments performed thereon have pointed out the need to use enormous amounts of energy to heat the gases, which at the end of the preheating process are at only 700-800°C.

If now one calculates the ratio of the energy contributions supplied to an electric arc furnace with preheating, operating according to the teachings of the present invention, and assuming an addition of 40 kg of rubber per ton of scrap, we now have the following distributions among the sources of the energy required for melting:
-- electric power: approximately 50%
-- chemical energy: approximately 22%
-- preheating energy: approximately 9%
-- complementary energy arising from the combustion of added energy-releasing material (rubber): approximately 19%

The consumption of electric power, which in a conventional shaft furnace was 78% (see above), drops here to only 50%, with a gain of approximately 28%, 19% of which is provided by the energy-releasing material that is mixed with the ferrous material to be melted.

The use of the contribution of alternative energy requires appropriate plant solutions, defined on the basis of the specific type of furnace on which they must act.

With regard to the plant, the method can in any case be generically divided into the following steps:
-- feeding the fuel and then mixing it with the scrap
-- triggering combustion
-- supporting and managing combustion

Depending on the furnace at issue, these steps can be present simultaneously or only partially and can also have different configurations. Because of this, the various implementations of the process on the various types of furnace mentioned earlier in the section entitled "Description of the prior art" are presented hereinafter. The plant on which the greatest attention is focused is the plant with preheating in a horizontal channel, of the CONSTEEL type. The reason for this choice is the possibility of better implementing the entire inventive teaching in this facility.

### Fuel feeding

### Feeding and mixing the fuel in the CONSTEEL plant.

The feeder system must be able to ensure the following functions:
1. distribution of a uniform amount of fuel on the scrap
2. ability to perform feeding in large amounts

Item (1) is dictated by various aspects. First of all, we know that combustion generates maximum heat only when the comburent and the fuel are present in their stoichiometric ratio. Since the injection of the comburent in the preheater has a constant flow-rate (as shown hereinafter), the fuel must also have a constant flow-rate in order to ensure stoichiometry.

If the amount of complementary fuel were not constant, the result would be lower-than-expected heating of the scrap.

If indeed we take the imbalance between fuel and comburent to the limit, we reach the two extreme cases, and particularly:
-- the fuel is partially or fully used up in the furnace (severe excess of complementary fuel)
-- the scrap and the exhaust gases of the furnace are cooled by the injection of the comburent (severe excess of comburent or lack of complementary fuel)

In view of the considerable length of the duct, these situations may also occur simultaneously in different regions.

Even without reaching these extreme situations, the imbalance between the fuel and the comburent makes process management more difficult: hence the reason to have a feed that is as constant as possible.

Feed constancy is also required for the practice of the furnace, in order to precisely generate a chart plotting energy and furnace running weight so as to determine whether the point that is thus determined lies in the intended heating range. In the case of an inconstant feed, identification of the point on the chart is much less accurate.

Item (2) is instead a simple observation: assuming for example that one feeds a 150 t/h steel furnace with 30 kg/t of fuel, the feeder system must be able to feed more than 100 tons/day of fuel.

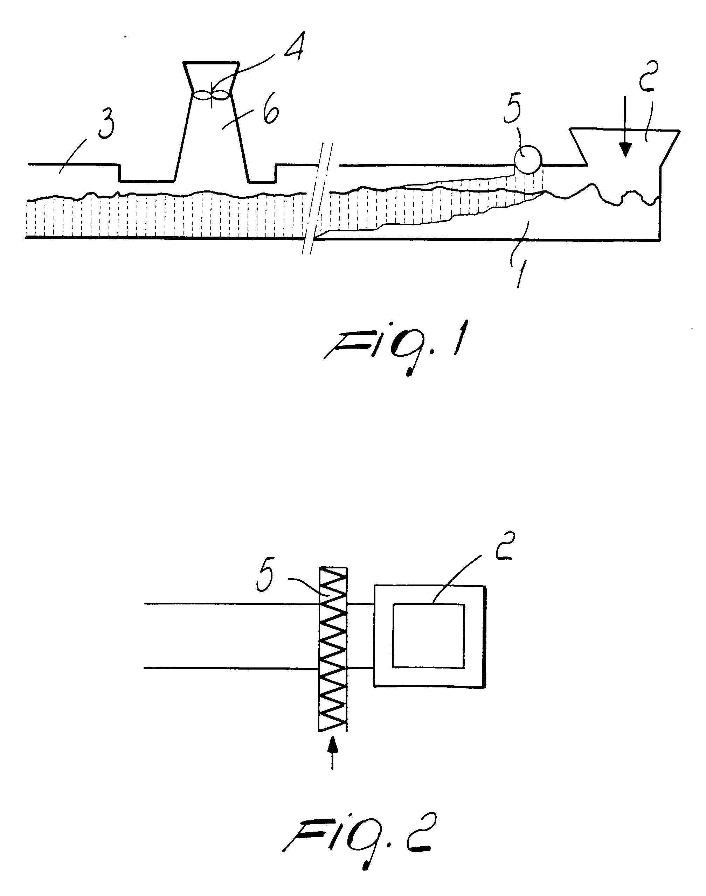

Figures 1 and 2 schematically show such a plant in its main components.

In figure 1, the reference numeral 1 designates a conveyor on which the ferrous material is placed by the feeder hopper 2. The reference numeral 6 designates the so-called "dynamic seal" device, which has the purpose of separating the exhaust gases that arrive from the melting furnace through the channel 3 from the feed air that can enter through the feeding inlet 2. In the dynamic seal 6 there is a suction fan 4.

A screw feeder 5 (see also figure 2, which is a plan view of the device of figure 1) feeds the complementary energy-releasing material that is required to provide the present invention and distributes it uniformly and in metered amounts on the surface of the scrap that is fed. As a consequence of the movement of the scrap in the vibrating conveyor, of the intrinsic porosity of the scrap, and of the vibration to which it is subjected, the energy-releasing material distributed by the screw feeder 5 then penetrates the scrap (as shown by the dashed lines in figure 1) and mixes with it intimately.

The system for conveying the energy-releasing material shown here, with the aid of a screw feeder, is of course merely an example: any other type of conveyance (pneumatic or mechanical) may in fact be equally appropriate.

When the mix arrives in the preheating duct (designated by 3 in figure 1), the complementary energy-releasing material (which can also be more simply termed "fuel") has been fully absorbed within the mass of scrap, so that the surface of the scrap bed is completely clear.

This intimate mixing of the scrap with the complementary energy-releasing material or, respectively, of the ferrous material respectively with the complementary "fuel" is important to provide uniform combustion of the fuel inside the scrap and thus achieve the most uniform possible transfer of heat to the mass of the scrap and accordingly heat it uniformly.

What has been described here in detail for the CONSTEEL process can of course be likewise applied to all of the above-mentioned shaft furnaces that have continuous charging and have a preheating duct. The fact that said duct is horizontal (as in the CONSTEEL case) or vertical (as in the Tokyo Steel IHI case, for example) is not decisive. The only important factor is how intimate the resulting mixing between the ferrous material and the complementary energy-releasing material is.

At this point, once again, the importance of having a preheating duct that continuously feeds the ferrous material into the furnace should be briefly stressed.

In the case of continuous feeding, the heat generated by the complementary energy must be transferred to the scrap outside the furnace. Continuous-feed furnaces usually operate with liquid ferrous material inside the furnace. It would therefore be useless to burn the fuel inside said furnace, since due to the minimal temperature difference between the combustion gases and the bath only a minimal part of the heat would be absorbed and the remaining part would uselessly overload (in terms of flow-rate, temperature, and pollutants) the exhaust gas unit. As regards the feeding of the complementary energy-releasing material in a conventional furnace, fed discontinuously by virtue of the so-called "buckets", in this case the most logical way to achieve the aim and objects of the present invention is to introduce the complementary energy-releasing material directly in the bucket, for example by virtue of an injection system (pulsed lance or the like).

The bucket is in fact usually charged in several steps, since its volume is many times larger than the volume that the charging system (skip, electromagnet,...) can withstand. The fuel feeding system takes advantage of this particularity. At each partial charge in the bucket, an appropriate injection system (preferably a pneumatic one) distributes a layer of fuel on the scrap surface that has just formed. By repeating the charging and injection sequence several times it is possible to distribute the fuel inside the mass of scrap in the bucket. The higher the number of charging-injection cycles and therefore of layers of fuel, the more the distribution of the fuel is uniform.

Distribution is also facilitated at the time of the discharge of the bucket in the furnace, when the scrap is mixed further.

However, this embodiment of the method applied to a conventional electric arc furnace of the shaft type, while certainly possible, is not however a preferred solution for the application of the present invention, which is preferably applied in the above described furnaces that have preheating of the ferrous material and continuous feeding. However, even this application, like the applications of shaft furnaces with discontinuous charging (the Fuchs furnace, for example), are within the scope of the present invention. In this last case, for example, the furnaces are fed with scrap through a wide duct that is fixed to the roof of the furnace. The scrap is charged into the furnace and into the duct, by means of buckets, charging the furnace first and then the duct.

An example is the above-mentioned shaft furnace developed by Fuchs, in which complete charging occurs by virtue of the volume of three buckets (one in the furnace and two in the duct).

The fuel feeding method is very similar to the one developed for conventional furnaces. In the case of shaft furnaces with discontinuous scrap feeding, there is also the possibility of acting on two levels:
-- before charging in the preheating duct, by feeding the charging bucket with fuel
-- during duct charging, by acting with an appropriate injector to form a layer of fuel on the surface that divides one charge from the next.

Another technical aspect linked to the practical execution of the inventive method will now be considered, i.e., the triggering of the combustion of the complementary energy-releasing material by means of appropriate burners.

It is in fact evident that to allow the inventive method to develop in the best manner and provide maximum energy efficiency, the combustion of the energy-releasing material must occur in a precisely controlled manner. In other words, it must burn neither too soon nor too late, due to the above-mentioned reasons.

The following description therefore deals with this problem.

### Burners (triggering combustion)

### Burners in the CONSTEEL plant

In the invention, according to a preferred embodiment, a group of burners is adopted which is located in the preheating duct, in its end part and ahead of the exhaust gas aspirator duct.

There are two reasons to adopt this group:

The first reason is to trigger the combustion of the fuel contained in the scrap.

In passing through the conveyor, the fuel will have certainly penetrated the mass of scrap, thus moving away from the surface. In the "original" version of the preheating duct (CONSTEEL model) the layers of scrap that are distant from the surface are affected only marginally by heating by the exhaust gases of the furnace. One of the modifications proposed here relates to the injection of air into the mass of scrap. The effect of the temperature profile in the scrap, combined with cooling on the part of the injected air, causes the deeply located fuel to fail to reach the temperature required to ignite. This means that it is able to enter the furnace, where due to the high temperatures it breaks down and ignites instantly, possibly causing unpleasant situations.

Because of these reasons, ignition of the energy-releasing material must occur as early as possible along the entire height of the bed of scrap, so that the injected air does not keep the deepest layers of the scrap cold but on the contrary provides the comburent required for combustion of all the energy-releasing material that is present.

Another reason for igniting the fuel as early as possible relates to the dynamics of heat exchange between the combustion gases and the scrap: the exchange is greater as the available time increases (even in the case of fast furnaces), as the temperature difference between the gases and the scrap increases, and as the exchange surface increases. If the heat is exchanged within the preheating duct, the time available is long enough and the exchange occurs between hot gases and "cold" scrap on a surface that, as mentioned, is very large. If the heat is generated in the furnace, the available time is very short and exchange occurs between hot gases and hot molten scrap through the limited surface of the bath. In this second case, heat exchange is therefore very limited.

The second reason for adopting the above-described preferred arrangement of burners, is to increase the temperature of the combustion gases before treating them in the exhaust gas unit. If the additional fuel were not supplied, the temperature of the gases would be lower than the value set by antipollution standards. Because of this, even when the scrap is not supplied with fuel the gases must still have a temperature that is equal to, or higher than, the set temperature.

In the original CONSTEEL plant there is a reheating burner that is arranged at the inlet of the exhaust gas duct, with the only purpose of heating the gases sufficiently if necessary. The conceptual difference between the inventive arrangement of the burners and the CONSTEEL plant is therefore the main use for which they are intended: igniting the fuel for the first case and heating the gases for the latter case. Because of this, their placement is also different: in the preheating duct for the first case and in the exhaust gas aspirator duct for the latter case.

The fact should be stressed that the primary effect of the burners is combustion triggering. The increase in the temperature of the exhaust gases (which is intrinsically too low) and also partially of the scrap is merely a consequence of the process that is applied. This means using the energy of the burners for the process instead of for a service of the process.

In order to obtain the desired effect, the present invention therefore proposes the following technical solution:
-- a group of burners installed at the beginning of the preheating duct (in the scrap travel direction)
-- two configurations for the burners of this group:
   1. burners fixed to the roof of the channel, with their jet at right angles to the gas stream and directed against the surface of the scrap
   2. burners fixed to the side walls of the channel below the level of the scrap, with jets that directly enter the mass of scrap.

The burners of the first category are of the high-speed type, so that the generated gases are at least partially able to penetrate the mass of scrap, igniting the fuel that is present in this region.

The products of the combustion of the burners also increase the temperature of the exhaust gases to a value that is very close to the intended one required by statutory provisions, thus transforming the thermal facility that serves the reheater into a simple energy contributor.

The burners of the second category instead have the purpose of igniting the fuel that is located in the deepest layers, which as such are not reached by the gases of the burners 1.

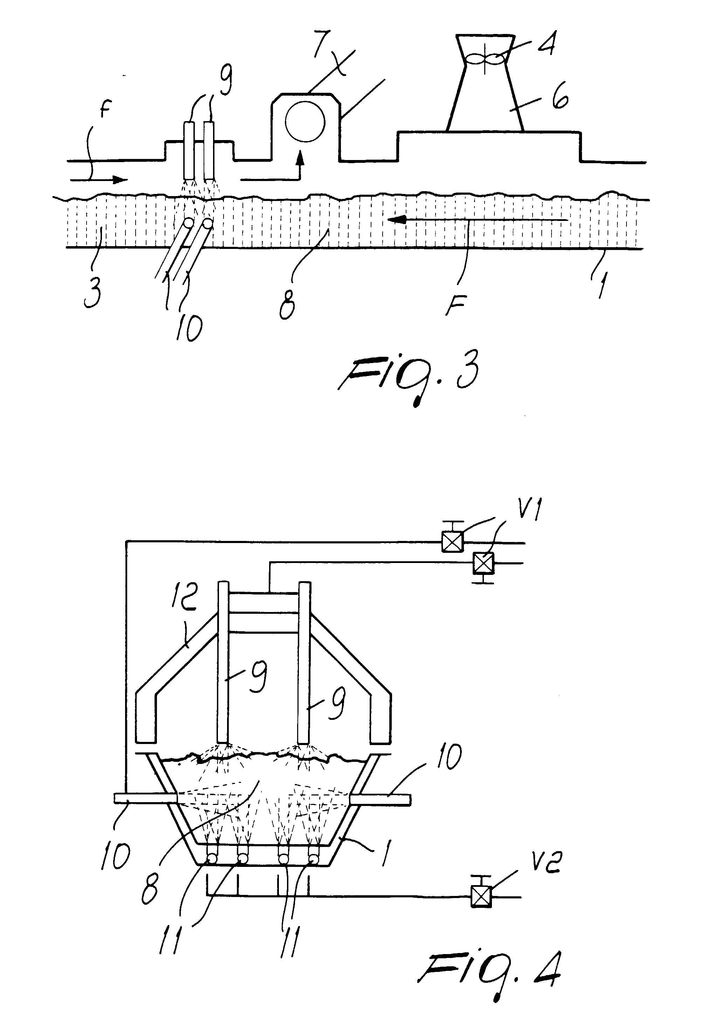

In figure 3, which schematically shows an apparatus for feeding a melting furnace (not shown) by means of a horizontal preheating channel 3 that is fed continuously (i.e., a CONSTEEL plant), the same elements as in figures 1 and 2 are designated by the same reference numerals. The arrow F indicates the direction of the movement of the ferrous material in the channel of the conveyor 1, whereas f is the arrow that indicates the direction of motion of the exhaust gases in the channel 3. The exhaust gases move in countercurrent with respect to the fed ferrous material, which is designated by the reference numeral 8.

The reference numeral 9 designates burners that are fixed to the roof of the channel 3 so that their jet lies at right angles to the gaseous stream of the exhaust gases, designated by f, and is directed against the surface of the scrap, whereas the reference numeral 10 designates burners that are fixed to the walls of the channel 3 below the level of the scrap 8. These burners direct their jet of gas directly into the scrap 8. Figure 3 shows that the point of the channel 3 in which combustion of the energy-releasing material is triggered by the burners 9 and 10 is located very close to the point where the opening of the exhaust gas aspirator duct 7 of the channel 3 is located. By virtue of this provision, combustion of the complementary energy-releasing material assuredly occurs fully in the channel 3, i.e., before the ferrous material is fed into the melting furnace.

As regards the combustion of the energy-releasing material in conventional furnaces, said furnaces already have burners. If their distribution is not uniform, it is necessary to complete it by inserting new ones.

In this type of furnace it is also possible to associate a fuel injector with each burner as shown in figure 4. This possibility can also be extended to all discontinuous-charging furnaces, where there are therefore periods of time, between one tapping and the next, during which the furnace is exclusively charged with cold or insufficiently preheated scrap.

In general, the present inventive technology is compatible with tuyere technology and with all its effects.

As regards so-called "shaft" furnaces (such as the Fuchs type), the burners are uniformly distributed over the entire circumference of the feeding duct. Instead of being arranged at the opening of the duct (as in the case of continuous preheating), they are arranged directly ahead of the roof of the furnace. There are two reasons for this choice:
-- if there is no scrap flow speed (as in the case of continuous charging), ignition is unable to propagate to all the fuel contained in the shaft.
-- since this type of furnace has a "cold" start, at the beginning there is no stream of hot exhaust gases from the furnace which can in turn act as an igniting agent.

As regards the feeding of the comburent (air or oxygen) for the combustion of the energy-releasing material, hereinatfer there are set forth some useful indications as to the manner of achieving this goal in an optimum manner within the scope of the present invention.

### Comburent injectors

### Injectors in the CONSTEEL plant with preheating in a horizontal channel and continuous feeding.

The use of the combustion of energy-releasing material within the volume of the scrap requires considerable amounts of oxygen. This oxygen is supplied in the form of air (without in any case barring the possibility of injecting enriched air or pure oxygen) by means of nozzles that are located on the bottom of the channel (optionally on the sides as well). Placement on the bottom of the channel is dictated by the fact that the combustion gases necessarily move upwards to be released into the free region, and therefore any injection of air on the sides or (worse still) from above must contrast this ascending stream, losing some of its effectiveness.

As regards these channels, the possibility of conveying gases other than air is left available:
-- combustible gases (methane, propane, butane) in order to increase the heating of the scrap.

The injection nozzles are distributed along the duct, and the flow-rate of each nozzle is determined according to the situation:
-- uniform distribution with flow-rate equally divided between the burners
-- progressive distribution with flow-rate divided according to the requirements
-- combination of the two previous cases.

The total flow-rate is calculated (and optionally refined with experience) exclusively as a function of the amount of fuel mixed with the scrap. In the case of a constant fuel feed (normal case), the injected air flow-rate is also constant. Management of combustion above the scrap has been described in detail in a parallel Swiss patent application no. 01534/95-7 (EPA N. 96108333.4 of May 24, 1996).

In any case, it should be stressed that while the process for the combustion of the energy-releasing material is independent of what occurs outside the bed of scrap, management of the combustion of the exhaust gases of the furnace is affected by this process, due to the gases that originate from the bed of scrap and mix with the exhaust gases that arrive from the furnace.

Figure 4, which is a sectional view taken along the channel 3 of the conveyor 1, schematically shows both the burners 9 and 10, already shown in figure 3 and arranged essentially in the vicinity of the exhaust gas aspirator duct 7, and the comburent injectors 11, which are arranged on the bottom of the channel 3 and are distributed along the entire length of the conveyor 1.

As regards the combustion of the energy-releasing material by means of the injectors 11, the fact is again stressed that according to a preferred embodiment of the invention it is possible to use, for this purpose, a gas other than air and oxygen, and in particular it is possible to use, for this purpose, a highly energy-releasing gas such as methane, propane, butane, or the like.

Figure 4 also shows the regulator valve V₁, used to control the amount of fuel fed to the burners 9 and 10, and the valve V₂ used to feed the fuel injectors 11 for the energy-releasing material that is mixed with the scrap.

According to a preferred embodiment of the invention, also shown schematically in figure 4, the invention allows to achieve an important simplification of the construction of the roof 12 (or hood) of the channel 3.

In the original concept of the CONSTEEL plant, the roof of the duct is internally lined with refractory. This condition is forced by the fact that much of the heat absorbed by the scrap originates from the irradiation of the roof.

In the concept according to the present invention, the weight of irradiation is no longer predominant in the calculation of the heat absorbed by the scrap, since much of the heat necessary to heat the scrap is provided by means of the fuel that burns inside the volume of the scrap.

Since the reason for the use of refractory-lined roofs no longer holds, the invention, in a preferred embodiment, proposes the use of cooled roofs (of the tube-tube type, of the spray cooler type, or of the mixed type).

The consequent advantages are:
-- significantly longer life ("eternal")
-- elimination of significant refractory maintenance costs
-- considerably reduced total weight. This is also a benefit for the entire structure of the preheating duct, which is currently unable to withstand the loads that are imposed, also due to the oscillating motions
-- excessive heating of the surface of the scrap is avoided.

The combined effect of refractory irradiation and of combustion inside the scrap could create excessive heating of the surface layers of the scrap. Since the radiative contribution decreases by using cooled roofs, this danger is reduced considerably.

Finally, as regards the injection of the comburent for the complementary energy-releasing material in plants provided with preheating with a vertical preheating duct and with or without continuous charging of the scrap (therefore "Tokyo Steel" or "Fuchs" plants), here we merely wish to note that in order to perform the basic method according to the present invention the distribution of the injectors used for combustion of the energy-releasing material must be uniform along the circumference of the duct. Their distribution and management in the case of continuous or discontinuous charging is in principle identical to what has been described for the CONSTEEL plant.

The problem of comburent injection in conventional-type furnaces does not arise. The only aspect to be checked is their uniform distribution and the flow-rate that they have available. Combustion of the energy-releasing material in fact requires very large amounts of comburent.

The devices required to achieve the inventive process, which have been described in greater detail and shown in the figures for the case of the plant with horizontal preheating channel and continuous furnace feeding, i.e., for the CONSTEEL plant, which is the most complicated case but also technically the most interesting, can be provided in a similar manner for the other melting plants mentioned in the introduction. Their practical execution is within the grasp of any expert in the field, and this makes any further description unnecessary.

The invention allows to provide, by virtue of the addition of appropriate energy-releasing material during the preheating and/or melting of the ferrous material, important energy savings in the consumption of electric power supplied to the melting arc (on the order of 20%). Furthermore, an aspect that should not be underestimated is that it also allows to destroy by combustion remainders of industrial productions (for example used tires, but not only) that are otherwise difficult to eliminate and are in any case available on the waste market at a low price if not indeed for free or at a negative price. Therefore, on the whole, this is a double contribution to the general problem of environmental protection as well as an economic advantage in the operation of melting furnaces that has a primary importance.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for melting ferrous metals, particularly scrap, by means of an electric arc melting furnace for the production of steel, wherein the energy fed into the furnace comprises a component of electric power supplied by means of the electrodes and a component of chemical energy generated by the combustion of liquid fuels in burners and by the combustion of carbon that is injected in the furnace and bonded by oxygen, characterized in that part of the energy fed into the furnace for the melting process is provided by the introduction and combustion of energy-releasing material that is intimately mixed with the ferrous material fed into the furnace, said combustion occurring in a scrap preheating duct and being triggered in said duct by burner means, said combustion being supported and managed by comburent gas injection.

2. The method for melting ferrous metals according to claim 1, characterized in that the melting furnace is an electric arc furnace that is fed discontinuously by successive charges and in that the intimate mixing of the energy-releasing material with the ferrous metal is performed prior to the introduction of the charge of ferrous material in the furnace by means of the charging bucket or by placing in the charging bucket ferrous material that has already been intimately mixed with the energy-releasing material, or by charging the charging bucket with successive charges of ferrous material and injecting in said bucket, between each charge and the next, a layer of energy-releasing material.

3. The method for melting ferrous metals according to claim 1, characterized in that the melting furnace is an electric arc furnace that is fed continuously with ferrous material by means of a conveyor for feeding the ferrous material, wherein the ferrous material is preheated prior to entering the melting furnace by making contact with the exhaust gases of the furnace, which are forced to pass through, or skim over, the ferrous material, in countercurrent, during feeding to the furnace in the conveyor, and furthermore characterized in that the intimate mixing of the ferrous material with the energy-releasing material is performed in the conveyor (1) by distributing the energy-releasing material in or on the mass of the ferrous material that is moving in the conveyor (1) (figure 1).

4. The method for melting ferrous metals according to claim 1, characterized in that the energy-releasing material that is intimately mixed with the ferrous material is in solid form and has a particle size that is small enough to facilitate its intimate mixing with the ferrous material.

5. The method according to claim 4, characterized in that the mixed energy-releasing material is constituted by synthetic tire rubber.

6. The method for melting ferrous metals according to claim 1, characterized in that the amount of complementary energy fed by introducing energy-releasing material is between 10% and 30% of the total energy used in the process for melting the ferrous material.

7. The method for melting ferrous metals according to claim 3, characterized in that the combustion of the energy-releasing material is performed during the conveyance of the mixture of ferrous material and energy-releasing material in the conveyor (1).

8. The method for melting ferrous metals according to claim 3, characterized in that the exhaust gases that originate from the melting furnace, after passing through the conveyor (1), are fed to an exhaust gas aspiration and treatment unit (4), which comprises a reheating chamber in which the exhaust gases are heated, if necessary, to preset temperatures and with preset retention times, and in that compounds that generate pollutants are also used as energy-releasing material.

9. The method for melting ferrous metals according to one of claims 3, 7, or 8, characterized in that the combustion of the energy-releasing material added to the ferrous material is triggered in the conveyor (1) in the furthest possible point with respect to the melting furnace and preferably directly after the inlet in the conveyor (1), relative to the direction of motion of the ferrous material in the conveyor (1), of the duct (7) that conveys the exhaust gases to the exhaust gas aspiration and treatment unit.

10. The method for melting ferrous metals according to claim 9, characterized in that the said comburent gas is air or oxygen, said combustion of the energy-releasing material being triggered by feeding said comburent gas at right angles above the bed of the ferrous material and/or directly and uniformly inside the mass of ferrous material that is moving on the conveyor (1).

11. The method for melting ferrous metals according to claim 7, characterized in that the comburent for the combustion of the energy-releasing material is fed in the lower part of the conveyor (1) by virtue of feeding points (11) that are distributed along the entire length of the conveyor (1).

12. The method for melting ferrous metals according to claim 1, characterized in that combustible gases like methane, propane, butane et cetera are also used for the combustion of the energy-releasing material.

13. Method for melting ferrous metals according to claim 3, wherein the feeder conveyor (1) is a closed conveyor, characterized in that the upper part of the conveyor (1) is cooled.

## Patentansprüche

1. Verfahren zum Schmelzen von Eisenmetallen, insbesondere von Schrott, mit einem Lichtbogen-Schmelzofen zur Stahlerzeugung, wobei die dem Ofen zugeführte Energie aus einem Anteil durch die Elektroden zugeführter elektrischer Energie und einem Anteil chemischer Energie besteht, die durch die Verbrennung flüssiger Brennstoffe in Brennern und die Verbrennung von in den Ofen injiziertem und durch Sauerstoff gebundenem Kohlenstoff erzeugt wird, dadurch **gekennzeichnet**, daß ein Teil der dem Ofen für den Schmelzvorgang zugeführten Energie durch die Zugabe und die Verbrennung von energiefreisetzendem Material geliefert wird, das gründlich mit dem dem Ofen zugeführten Eisenmaterial vermischt wird, wobei die Verbrennung in einem Schrott-Vorwärmkanal erfolgt und in dem Kanal durch Brenner ausgelöst und durch Injizieren von Verbrennungsgas unterstützt und gesteuert wird.

2. Verfahren zum Schmelzen von Eisenmetallen nach Anspruch 1, dadurch **gekennzeichnet**, daß der Schmelzofen ein mit aufeinanderfolgenden Chargen diskontinuierlich beschickter Lichtbogenofen ist, und daß das gründliche Vermischen des energiefreisetzenden Materials mit dem Eisenmetall vor dem Einführen der Charge Eisenmaterial in den Ofen durch das Beschickungsgefäß erfolgt oder indem das Beschickungsgefäß mit bereits mit dem energiefreisetzenden Material gründlich vermischten Eisenmaterial gefüllt wird, oder indem das Beschickungsgefäß mit aufeinanderfolgenden Chargen Eisenmaterial gefüllt und zwischen aufeinanderfolgenden Chargen eine Schicht energiefreisetzenden Materials injiziert wird.

3. Verfahren zum Schmelzen von Eisenmetallen nach Anspruch 1, dadurch **gekennzeichnet**, daß der Schmelzofen ein mittels einem Förderer zum Zuführen des Eisenmaterials kontinuierlich beschickter Lichtbogenofen ist, wobei das Eisenmaterial vor dem Eintritt in den Schmelzofen durch Kontakt mit den Abgasen des Ofens vorgewärmt wird, welche in entgegengesetzter Richtung durch oder über das Eisenmaterial geleitet werden, während dieses dem Ofen in dem Förderer zugeführt wird, und ferner dadurch gekennzeichnet, daß das gründliche Vermischen des Eisenmaterials mit dem energiefreisetzenden Material in dem Förderer (1) durch Verteilen des energiefreisetzenden Materials in oder auf der in dem Förderer (1) transportierten Eisenmaterialmasse erfolgt (Fig. 1).

4. Verfahren zum Schmelzen von Eisenmetallen nach Anspruch 1, dadurch **gekennzeichnet**, daß das mit dem Eisenmaterial gründlich vermischte energiefreisetzende Material in fester Form vorliegt und eine Teilchengröße hat, welche klein genug ist, um sein gründliches Vermischen mit dem Eisenmaterial zu ermöglichen.

5. Verfahren nach Anspruch 4, dadurch **gekennzeichnet**, daß das vermischte energiefreisetzende Material synthetischer Reifengummi ist.

6. Verfahren zum Schmelzen von Eisenmetallen nach Anspruch 1, dadurch **gekennzeichnet**, daß die Menge der durch Einführen von energiefreisetzendem Material zugeführten Komplementärenergie zwischen 10% und 30% der für den Schmelzvorgang des Eisenmaterials eingesetzten Energie liegt.

7. Verfahren zum Schmelzen von Eisenmetallen nach Anspruch 3, dadurch **gekennzeichnet**, daß die Verbrennung des energiefreisetzenden Materials während des Förderns der Mischung aus Eisenmaterial und energiefreisetzendem Material in dem Förderer (1) erfolgt.

8. Verfahren zum Schmelzen von Eisenmetallen nach Anspruch 3, dadurch **gekennzeichnet**, daß die aus dem Schmelzofen stammenden Abgase nach ihrem Durchgang durch den Förderer (1) einer Einheit (4) zum Absaugen und Nachbehandeln von Abgasen zugeführt werden, welche eine Nachwärmkammer enthält, in der die Abgase, wenn nötig, auf vorbestimmte Temperaturen und mit vorbestimmten Haltezeiten erwärmt werden, und daß Verunreinigungen erzeugende Verbindungen ebenfalls als energiefreisetzendes Material verwendet werden.

9. Verfahren zum Schmelzen von Eisenmetallen nach einem der Ansprüche 3, 7 oder 8, dadurch **gekennzeichnet**, daß die Verbrennung des dem Eisenmaterial beigemischten energiefreisetzenden Materials in dem Förderer (1) an der vom Schmelzofen weitestmöglich entfernten Stelle und vorzugsweise direkt nach dem Eingang des die Abgase zu der Einheit zum Absaugen und Nachbehandeln der Abgase transportierenden Kanals (7) in den Förderer (1) relativ zur Transportrichtung des Eisenmaterials in dem Förderer erfolgt.

10. Verfahren zum Schmelzen von Eisenmetallen nach Anspruch 9, dadurch **gekennzeichnet**, daß das Verbrennungsgas Luft oder Sauerstoff ist, wobei die Verbrennung des energiefreisetzenden Materials dadurch ausgelöst wird, daß das Verbrennungsgas rechtwinklig über dem Bett aus Eisenmaterial und/oder direkt und gleichmäßig in die auf dem Förderer (1) transportierte Eisenmaterialmasse zugeführt wird.

11. Verfahren zum Schmelzen von Eisenmetallen nach Anspruch 7, dadurch **gekennzeichnet**, daß das Verbrennungsmittel für die Verbrennung des energiefreisetzenden Materials im unteren Teil des Förderers (1) mittels über die gesamte Länge des Förderers (1) verteilter Zuführstellen (11) zugeführt wird.

12. Verfahren zum Schmelzen von Eisenmetallen nach Anspruch 1, dadurch **gekennzeichnet**, daß für die Verbrennung des energiefreisetzenden Materials auch Verbrennungsgase wie Methan, Propan, Butan, usw. verwendet werden.

13. Verfahren zum Schmelzen von Eisenmetallen nach Anspruch 3, wobei der Zuführförderer (1) ein geschlossener Förderer ist, dadurch **gekennzeichnet**, daß der obere Teil des Förderers (1) gekühlt ist.

## Revendications

1. Procédé de fusion de métaux ferreux, particulièrement de déchets, par l'intermédiaire d'un four de fusion à arc électrique pour la production d'acier, dans lequel l'énergie fournie dans le four comprend un composant de puissance électrique fourni par l'intermédiaire des électrodes et un composant d'énergie chimique engendré par la combustion de combustibles liquides dans des brûleurs et par la combustion de carbone qui est injecté dans le four et lié par l'oxygène,
caractérisé en ce qu'une partie de l'énergie fournie dans le four pour le processus de fusion est fournie par l'introduction et la combustion de matière libérant de l'énergie, qui est mélangée intimement avec la matière ferreuse fournie dans le four, ladite combustion survenant dans un conduit de préchauffage des déchets et étant déclenchée dans ledit conduit par des moyens à brûleurs, ladite combustion étant supportée et gérée par injection de gaz comburant.

2. Procédé de fusion de métaux ferreux selon la revendication 1,
caractérisé en ce que le four de fusion est un four à arc électrique qui est alimenté de façon discontinue par des charges successives et en ce que le mélange intime de la matière libérant de l'énergie avec le métal ferreux est réalisé avant l'introduction de la charge de matière ferreuse dans le four par l'intermédiaire du récipient de chargement ou en plaçant dans le récipient de chargement la matière ferreuse qui a déjà été intimement mélangée avec la matière libérant de l'énergie, ou en chargeant le récipient de chargement avec des charges successives de matière ferreuse et en injectant dans ledit récipient, entre chaque charge et la suivante, une couche de matière libérant de l'énergie.

3. Procédé de fusion de métaux ferreux selon la revendication 1,
caractérisé en ce que le four de fusion est un four à arc électrique qui est alimenté de façon continue avec la matière ferreuse par l'intermédiaire d'un transporteur pour fournir la matière ferreuse, dans lequel la matière ferreuse est préchauffée avant d'entrer dans le four de fusion en étant en contact avec les gaz d'échappement du four, qui sont forcés de traverser ou de parcourir rapidement la matière ferreuse, à contre-courant, pendant l'alimentation vers le four dans le transporteur et, de plus, caractérisé en ce que le mélange intime de la matière ferreuse avec la matière libérant de l'énergie est réalisé dans le transporteur (1) en répartissant la matière libérant de l'énergie dans ou sur la masse de la matière ferreuse qui se déplace dans le transporteur (1) (figure 1).

4. Procédé de fusion de métaux ferreux selon la revendication 1,
caractérisé en ce que la matière libérant de l'énergie, qui est intimement mélangée avec la matière ferreuse, est sous une forme solide et présente une taille de particules qui est assez petite pour faciliter son mélangeage intime avec la matière ferreuse.

5. Procédé selon la revendication 4,
caractérisé en ce que la matière libérant de l'énergie, mélangée, est constituée par du caoutchouc de pneumatique synthétique.

6. Procédé de fusion de métaux ferreux selon la revendication 1,
caractérisé en ce que la quantité d'énergie complémentaire, fournie par l'introduction de la matière libérant de l'énergie, est entre 10 % et 30 % de l'énergie totale utilisée dans le processus pour fusionner la matière ferreuse.

7. Procédé de fusion de métaux ferreux selon la revendication 3,
caractérisé en ce que la combustion de la matière libérant de l'énergie est réalisée pendant le transport du mélange de matière ferreuse et de matière libérant de l'énergie dans le transporteur (1).

8. Procédé de fusion de métaux ferreux selon la revendication 3,
caractérisé en ce que les gaz d'échappement qui proviennent du four de fusion, après avoir traversé le transporteur (1), sont fournis à une unité de traitement et d'aspiration des gaz d'échappement (4), qui comprend une chambre de réchauffage dans laquelle les gaz d'échappement sont chauffés, si nécessaire, à des températures prédéterminées et avec des temps de séjour prédéterminés, et en ce que des composés qui engendrent des polluants sont également utilisés comme matière libérant de l'énergie.

9. Procédé de fusion de métaux ferreux selon l'une des revendications 3, 7 ou 8,
caractérisé en ce que la combustion de la matière libérant de l'énergie, ajoutée à la matière ferreuse, est déclenchée dans le transporteur (1) au point le plus loin possible par rapport au four de fusion et, de préférence, directement après l'entrée dans le transporteur (1), par rapport à la direction de déplacement de la matière ferreuse dans le transporteur (1), du conduit (7) qui transporte les gaz d'échappement vers l'unité de traitement et d'aspiration des gaz d'échappement.

10. Procédé de fusion de métaux ferreux selon la revendication 9,
caractérisé en ce que ledit gaz comburant est de l'air ou de l'oxygène, ladite combustion de la matière libérant de l'énergie étant déclenchée en fournissant ledit gaz comburant à angle droit au-dessus du lit de la matière ferreuse et/ou directement et uniformément à l'intérieur de la masse de matière ferreuse qui se déplace sur le transporteur (1).

11. Procédé de fusion de métaux ferreux selon la revendication 7,
caractérisé en ce que le comburant pour la combustion de la matière libérant de l'énergie est fourni dans la partie inférieure du transporteur (1) grâce à des points d'alimentation (11) qui sont répartis le long de la longueur totale du transporteur (1).

12. Procédé de fusion de métaux ferreux selon la revendication 1,
caractérisé en ce que des gaz combustibles comme le méthane, le propane, le butane, etc ... sont également utilisés pour la combustion de la matière libérant de l'énergie.

13. Procédé de fusion de métaux ferreux selon la revendication 3, dans lequel le transporteur d'alimentation (1) est un transporteur fermé, caractérisé en ce que la partie supérieure du transporteur (1) est refroidie.
